# FASCICULE DE BREVET EUROPEEN

(11) **EP 3 470 246 B1**
(45) Date de publication et mention de la délivrance du brevet: **26.07.2023**
(21) Numéro de dépôt: 18199637.2
(22) Date de dépôt: 10.10.2018
(51) Int. Cl.: B60C 23/04

(54) **PROCÉDÉ D'AUTOLOCALISATION DES CAPTEURS ÉQUIPANT LES ROUES D'UN VÉHICULE**
VERFAHREN ZUR AUTOMATISCHEN LOKALISIERUNG VON SENSOREN, DIE IN DEN RÄDERN EINES FAHRZEUGS EINGEBAUT SIND
METHOD FOR AUTO-LOCATION OF SENSORS MOUNTED ON THE WHEELS OF A VEHICLE

(30) Priorité: 13.10.2017 FR 1759638
(43) Date de publication de la demande: 17.04.2019
(73) Titulaire: LID Technologies, 31520 Ramonville-Saint-Agne (FR)
(72) Inventeur: MOREAU, Thierry, 31130 BALMA (FR); MARTINEZ, Benjamin, 64000 PAU (FR)
(74) Mandataire: Vuillermoz, Bruno

(56) Documents cités:
- EP-A1- 2 537 689
- WO-A1-2015/135660
- WO-A1-2016/121364
- DE-A1-102007 046 495
- FR-A1- 2 863 204
- US-A1- 2018 022 171
- Mitchell 1: "TPMS: 2006 - 2011 Mercedes-Benz M Class", Modern Tire Dealer , 16 mai 2016 (2016-05-16), XP002781725, Extrait de l'Internet: URL:http://www.moderntiredealer.com/articl e/713284/tpms-2006-2011-mercedes-benz-m-cl ass [extrait le 2018-07-06]

## Description

### DOMAINE D'APPLICATION DE L'INVENTION

La présente invention a trait au domaine des capteurs logés dans les roues d'un véhicule et notamment aux adaptations permettant d'en assurer l'autolocalisation et de les exploiter dans les meilleures conditions.

### DESCRIPTION DE L'ART ANTÉRIEUR

Il est connu de l'art antérieur des capteurs positionnés à l'intérieur des pneumatiques des véhicules afin de mesurer et de transmettre des données quant à la pression, à la température, etc...

Pour ce faire, chaque capteur placé dans chaque pneumatique est classiquement équipé d'un émetteur à radiofréquences à des fins de transmission sans fil desdites données à un module de réception placé sur l'essieu ou sur le châssis du véhicule. Ce module de réception reçoit et décode les signaux informatifs émis par les émetteurs de chaque roue.

Dans certains véhicules tels les poids lourds ainsi que les bus, les roues sont montées par paire à chaque extrémité d'essieu, on dit alors que les roues sont jumelées. Que les roues soient jumelées ou pas, il est difficile de différencier les émissions des capteurs aussi bien à l'arrêt que pendant le fonctionnement du véhicule sans mettre en oeuvre des techniques de codage et d'identification particulièrement complexes et onéreuses.

Afin que le récepteur puisse autolocaliser les roues, il doit connaître le côté d'un capteur (position à gauche ou à droite du véhicule) ainsi que la position relative au module de réception (à l'avant, à l'arrière, proche, lointain).

Une solution de différenciation est décrite dans le document EP1172656 qui propose un capteur pour détecter un sens de rotation d'un corps. Le capteur comprend un premier accéléromètre disposé, utilisé, sur le corps et ayant une première direction de détection; et un second accéléromètre disposé, utilisé, sur le corps et ayant une seconde direction de détection. Les deux accéléromètres sont agencés de telle sorte que les première et seconde directions de détection ne sont pas parallèles l'une à l'autre et ne sont pas parallèles à l'axe de rotation du corps, de sorte qu'il y a une différence de phase due aux effets gravitationnels entre les sorties des accéléromètres quand le corps tourne en cours d'utilisation. Les moyens reçoivent les signaux de sortie indicatifs d'accélération des premier et second accéléromètres et déterminent la relation de phase entre les deux signaux pour ainsi déterminer le sens de rotation du corps. La connaissance de l'accélération, du sens d'avancée du véhicule et enfin du sens de rotation des roues permet de différencier les signaux issus des capteurs des roues situées à gauche de ceux des capteurs des roues situées à droite.

Néanmoins, il apparaît que ces procédés et dispositifs sont mis en oeuvre pour une différenciation droite/gauche mais ne peuvent l'être dans une différenciation avant/arrière. En effet, la position relative au module de réception ne peut être déterminée grâce au rayonnement magnétique du capteur du fait que plusieurs roues d'un même côté peuvent être à égale distance du récepteur en fonction de son emplacement rendant l'autolocalisation impossible.

EP2537689 décrit un procédé consistant à mesurer la force du signal transmis selon des positions angulaires différentes de l'unité de transmission sans fil de la pression des pneus depuis les roues. Cette mesure permet de déterminer une intensité moyenne de signal spécifique pour chaque roue ce qui permet d'identifier l'origine du signal et donc de localiser la roue et le capteur associé envoyant le signal. Il exploite le paramètre de l'accélération comme moyen de déclenchement de la mesure de l'intensité du signal afin de s'assurer que le véhicule est en mouvement lors de la mesure. Ce mouvement assure que la mesure pourra être réalisée selon différentes positions angulaires du capteur émetteur associé au pneumatique ce qui implique un capteur d'accélération pour déterminer la position angulaire du capteur.

Il propose également d'utiliser le paramètre d'accélération afin de ne mesurer l'intensité du signal qu'à une certaine valeur d'accélération de sorte que les mesures soient réalisées toujours selon la même accélération.

Dans FR2863204 une antenne est affectée à chaque roue de sorte qu'une seule roue soit disposée dans le lobe d'émission de l'antenne de l'émetteur. Le paramètre de l'accélération est exploité pour identifier/discriminer les roues et les capteurs associés positionnés à la droite du véhicule et ceux positionnés à la gauche du véhicule.

Un autre document WO2016121364 décrit un système de surveillance de la pression des pneumatiques et un dispositif de détection de la position des roues où des capteurs d'accélération sont aussi utilisés pour déterminer la position angulaire du capteur.

Un autre inconvénient lié à l'exploitation de ces systèmes réside dans la gestion des batteries. En effet, bien qu'in fine, l'autolocalisation de tous les capteurs puisse être atteinte, il n'en demeure pas moins que, dans une pluralité de situations, l'émission ou la réception qu'ils doivent réaliser, n'est pas assurée dans de bonnes conditions ce qui conduit le capteur associé à la roue et le récepteur associé au châssis, à consommer de l'énergie de façon inutile. Les batteries équipant chaque capteur présentent alors des durées de vie limitées.

### DESCRIPTION DE L'INVENTION

Partant de cet état de fait, la demanderesse a mené des recherches visant à proposer une meilleure autolocalisation des boîtiers électroniques des capteurs logés dans les roues d'un véhicule.

Ces recherches ont abouti à la conception et à la réalisation d'un procédé nouveau facile à mettre en oeuvre et obviant aux inconvénients de l'art antérieur.

Ce procédé d'autolocalisation d'un capteur d'acquisition de données équipant une roue incluant un pneumatique d'un véhicule,
ledit véhicule comprenant une pluralité de roues et étant équipé d'un système comprenant un boîtier électronique d'un capteur d'acquisition de données placé dans chaque pneumatique et équipé d'un émetteur à radiofréquences à des fins de transmission sans fil desdites données à un module central d'émission et de réception placé sur l'essieu ou sur le châssis du véhicule, le module central d'émission et de réception recevant et décodant les signaux informatifs émis par les émetteurs de chaque roue, chaque boîtier électronique étant équipé pour mesurer l'accélération,
est remarquable en ce qu'il consiste à déterminer l'avant et l'arrière d'un pneumatique par prise de mesure de l'accélération.

La mesure de l'accélération mesurée au niveau d'un capteur tournant en même temps qu'une roue (puisque fixé à cette dernière) permet de déterminer à quel moment le capteur se trouve au point haut de sa trajectoire circulaire et à quel moment il se trouve à son point bas. En effet, l'accélération normale de la pesanteur terrestre est une des composantes de l'accélération mesurée, en conséquence :
- l'accélération mesurée est maximale au point bas de la trajectoire circulaire du fait que l'accélération à laquelle est soumise le capteur se trouve orientée dans la même direction que l'accélération normale de la pesanteur terrestre,
- l'accélération mesurée est minimale au point situé au haut de la trajectoire circulaire du fait que l'accélération à laquelle est soumise le capteur se trouve orientée en opposition de l'accélération normale de la pesanteur terrestre.

Un tel procédé peut s'appliquer aux systèmes de surveillance des pneumatiques d'un véhicule qui présentent cette configuration de communication avec des capteurs de température et/ou de pression.

On comprend qu'en connaissant le sens d'avancée du véhicule, la détermination de ces points d'accélération maximale et minimale correspondant respectivement aux points bas et haut de la trajectoire circulaire de la roue, permet d'établir que, lorsque le véhicule avance :
- l'avant de la roue et donc du pneumatique qui se trouve entre le point d'accélération minimale et le point d'accélération maximale,
- l'arrière de la roue et donc du pneumatique qui se trouve entre le point d'accélération maximale et le point d'accélération minimale.

Bien entendu, le maximum et le minimum mesurés de l'accélération dépendent de la position du capteur, les résultats ci-dessus peuvent être inversés à savoir que lorsque le véhicule avance :
- l'arrière de la roue et donc du pneumatique qui se trouve entre le point d'accélération minimale et le point d'accélération maximale,
- l'avant de la roue et donc du pneumatique qui se trouve entre le point d'accélération maximale et le point d'accélération minimale.

Cette caractéristique est particulièrement avantageuse en ce qu'elle assure l'établissement de façon sûre d'au moins un paramètre participant à la localisation ce qui va permettre de mettre en oeuvre plusieurs stratégies liées à la localisation avant et arrière mais également de gestion de la consommation d'énergie.

Cette caractéristique permet d'exploiter de façon nouvelle un paramètre disponible à savoir la mesure de l'accélération mesurée par le capteur dans le plan vertical (par rapport à un sol horizontal) qu'il occupe.

Selon l'invention, où lesdits boîtiers électroniques comprennent :
une unité de réception recevant des signaux radio du module central d'émission et de réception,
l'unité de réception étant capable de mesurer la puissance des signaux radio reçus du module central d'émission et de réception, le procédé est remarquable en ce qu'il comprend, pour chaque boîtier électronique, les opérations suivantes :
   - mesure de la puissance des signaux radio émis par le module central d'émission et de réception et reçus par le boîtier électronique,
   - répartition des signaux radio reçus dans les deux ensembles de signaux suivants
premier ensemble correspondant aux signaux reçus chronologiquement entre le point haut et le point bas,
deuxième ensemble correspondant aux signaux reçus chronologiquement entre le point bas et le point haut,
de sorte que
si une majorité de signaux reçus est mesurée à forte puissance entre le point haut et le point bas, la roue contenant le boîtier réalisant cette mesure est disposée à l'arrière du module central,
si une majorité de signaux reçus est mesurée à faible puissance entre le point haut et le point bas, la roue contenant le boîtier réalisant cette mesure est disposée à l'avant du module central.

Ainsi, après avoir déterminé où se situe le boîtier électronique par rapport à l'avant et à l'arrière de la roue, le procédé propose de déterminer la position avant ou arrière du boîtier électronique par rapport au module central d'émission et de réception.

Associée à une localisation gauche/droite tel que peut le proposer l'art antérieur, le procédé permet de réaliser une auto localisation exhaustive et efficace des boîtiers électroniques du système de surveillance.

La valeur de cette mesure de puissance peut être analogique, c'est-à-dire une représentation numérique de la puissance. Selon une autre méthode, la valeur de cette mesure peut être logique, c'est-à-dire une représentation binaire de la puissance par rapport à un seuil défini. Le taux de réception de cette valeur logique permet d'obtenir une image de la puissance (exemple dans le cas d'ondes radios LF : N seuils LF franchis dans une fenêtre de 4ms sur un nombre connu fixe d'émissions en 4 ms (P) ; taux = N/P).

Selon une autre caractéristique particulièrement avantageuse de l'invention, le procédé comprend l'opération de fixation du module central d'émission et de réception au niveau d'un axe d'essieu de sorte qu'une situation apparaisse où aucune majorité n'apparaît dans les signaux mesurés confirmant que la roue contenant le boîtier réalisant cette mesure est disposée à hauteur du module central d'émission et de réception.

Pour mettre en oeuvre ce procédé, les boîtiers électroniques vont pouvoir intégrer dans la trame des signaux envoyés au module central des informations liées à la puissance des signaux qu'ils ont reçus ou pas, à l'avant ou à l'arrière, avec des puissances différentes ou non.

Selon une autre caractéristique particulièrement avantageuse de l'invention, les signaux radios utilisés sont dans le spectre des basses fréquences (LF) c'est-à-dire la partie du spectre radioélectrique de fréquence comprise entre 30 kHz et 300 kHz. L'utilisation de cette plage de fréquence permet d'être plus précis et moins consommateur d'énergie.

Selon une autre caractéristique particulièrement avantageuse, le procédé comprend l'opération de variation de la puissance des signaux de basses fréquences (LF). Cette variation installe ou coupe une communication entre le module central et les boîtiers électroniques selon la puissance du signal ce qui permet de mieux localiser les boîtiers électroniques et les roues qui les portent.

La détermination de la situation du boîtier électronique par rapport à l'avant ou à l'arrière de la roue à un instant "t" permet d'envisager une pluralité d'autres applications notamment qui peut par exemple avoir des avantages dans la gestion des batteries.

En effet, selon une autre caractéristique particulièrement avantageuse de l'invention, le procédé consiste à faire émettre l'unité d'émission du boîtier électronique lorsque ce dernier se trouve bien orienté par rapport au module central d'émission et de réception.

Selon une autre caractéristique, le procédé consiste à faire émettre le module central d'émission et de réception vers l'unité de réception du boîtier électronique lorsque ce dernier se trouve bien orienté par rapport au module central d'émission et de réception.

Selon une autre caractéristique particulièrement avantageuse de l'invention, le procédé consiste à éviter de faire émettre simultanément les unités d'émission de boîtiers électroniques fixés à des roues jumelées lorsqu'ils se trouvent dans la même zone.

On comprend que cette sélection du bon moment pour émettre ou recevoir autorisée par la connaissance de la situation avant ou arrière des boîtiers électroniques va permettre une meilleure gestion des batteries. La qualité des transmissions est également améliorée du fait que les collisions sont évitées.

La mise en oeuvre de ce procédé requiert des modules fonctionnels déjà exploités dans ce type de système.

Ainsi, par exemple selon une configuration matérielle minimale permettant de mettre en oeuvre le procédé de l'invention, le boîtier électronique fixé à la roue comprend:
- capteurs de pression et/ou de températures,
- source d'énergie telle une batterie,
- microcontrôleur,
- transmetteur RF
- antenne RF,
- receveur LF,
- antenne LF,
- accéléromètre orienté radialement (Z),
- accéléromètre orienté tangentiellement (X).

Afin d'éviter de trop consommer l'énergie des batteries lors de l'exploitation de la différenciation de l'avant et de l'arrière des positions des pneumatiques à des fins d'émission ou de réception optimisées, le procédé de l'invention est remarquable en ce qu'il comprend un capteur de tilt haut ou bas de façon à déterminer dans quel secteur angulaire se trouve le boîtier.

Ce capteur tilt peut être positionné dans le boîtier, la roue, ou sur l'essieu.

La vitesse du véhicule peut être connue au moyen par exemple du module GPS équipant le module central d'émission et de réception du véhicule.

Un exemple connu de capteur tilt, contient une bille de métal à l'intérieur, et se comporte comme un interrupteur normalement fermé. Si on le penche à un angle supérieur à un seuil, le circuit est ouvert. Un tel capteur peut être utilisé pour capter (à moindre coût par rapport à un accéléromètre et en requérant moins d'énergie) les mouvements ou les changements d'inclinaison de la roue et du boitier positionné dans la roue.

Le fonctionnement du système peut alors être celui décrit ci-après.

Sur les premiers tours de roues, quand la stratégie de repérage de l'avant et de l'arrière de la roue est enclenchée, il est possible d'affecter un niveau de performance RF du système de surveillance reçu en fonction du degré angulaire de sa position lors de la rotation de la roue.

Ensuite, le récepteur sait définir pour chaque boîtier électronique quelles sont les sections angulaires favorables à l'émission de TPMS, le but étant d'éviter d'émettre dans les zones de mauvaises performances pour l'émission ou pour la réception pour sauvegarder la batterie.

Si l'on continue à utiliser la stratégie première, c'est-à-dire utiliser l'accéléromètre embarqué dans le boîtier électronique, la consommation est trop grande, jusqu'à 0,7µA.h par tour de roue. C'est pour cela, qu'une fois la cartographie réalisée au moyen des premières phases du procédé, on utilise alors un capteur tilt, à faible consommation. Ce capteur « tilt » est soit additionnel dans le dispositif minimal du TPMS, soit pour le cas d'un boîtier associé à la paroi du pneumatique, le tilt est donné naturellement par l'impact au sol du capteur.

Ainsi, au moyen d'un équipement existant ou très légèrement modifié, le dispositif de l'invention permet de réaliser cette économie de transmission qui peut doubler la durée de vie d'un capteur dans le cas le plus favorable. Le tilt sert au capteur à se repérer dans l'espace, entre deux tilts il se trouve à 180° du tilt, et linéairement on découpe les secteurs de roue grâce à la durée inter tilt du tour précédent, (on peut ainsi couper jusqu'à 16 secteurs) ce qui assure de disposer de la meilleure positon pour émettre ou recevoir.

Selon une autre caractéristique particulièrement avantageuse, le procédé est remarquable en ce que chaque boîtier électronique comprend un repère visuel sur sa surface supérieure afin de respecter une orientation lors de son installation dans la roue. Pour ce faire, lesdits boîtiers électroniques comprennent une flèche sur leur surface supérieure indiquant le flasque de la roue vers lequel la flèche doit être orientée lors du montage du boîtier dans la roue. Ainsi, tous les boîtiers sont orientés de la même façon et sont alors disposés en opposition dans des roues jumelées d'une roue à l'autre. La connaissance du sens de rotation détectée pour chaque roue permet alors de différencier des signaux issus des capteurs des roues jumelées et permet d'appliquer l'invention malgré le jumelage des roues.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé et d'un dispositif conformes à l'invention.

### BRÈVE DESCRIPTION DES DESSINS

La figure 1 est un dessin schématique d'une vue de dessus d'un véhicule à six roues d'une situation où le procédé de l'invention peut s'appliquer ;
La figure 2 est un dessin schématique d'une vue de côté d'une roue disposée devant un module central ;
La figure 3 reprend le dessin de la figure 1 avec une puissance de signal supérieure ;
La figure 4 reprend le dessin de la figure 1 avec une puissance de signal inférieure,
La figure 5 est un logigramme illustrant un mode de réalisation du procédé de l'invention,
La figure 6 est un dessin schématique d'une vue en perspective d'un mode de réalisation d'un boitier électronique conforme à l'invention,
Les figures 7a, 7b, 7c et 7d sont des dessins schématiques en vue de dessus de quatre véhicules différents illustrant la disposition des modules de réception selon l'implantation des roues,
La figure 8 est un dessin schématique en vue de dessus illustrant le positionnement des boîtiers des capteurs dans une configuration de véhicule présentant des roues jumelées,
La figure 9 est un dessin schématique des courbes sinusoïdales suivies par les mesures des accélérations.

### DESCRIPTION DES MODES DE RÉALISATION PRÉFÉRÉS

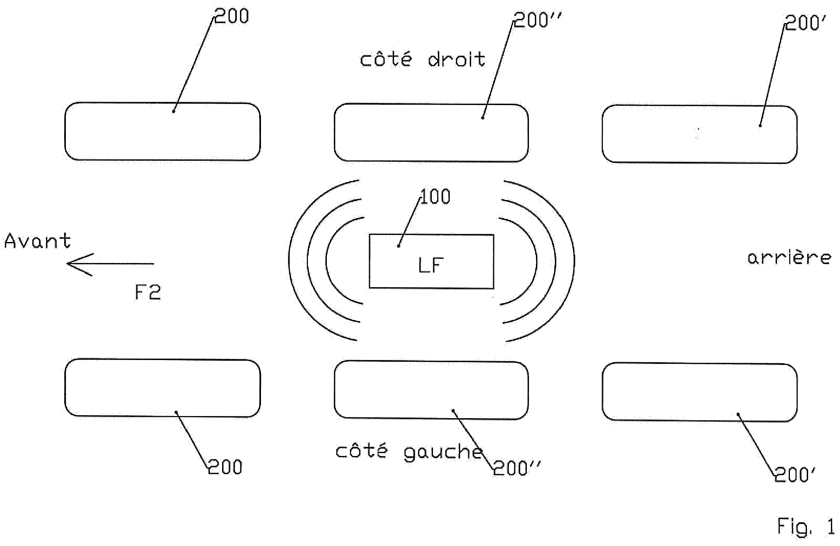

Comme illustré sur le dessin de la figure 1, un système de surveillance de la pression et/ou de la température des pneumatiques équipe un véhicule représenté ici en vue de dessus par ses six roues. Le système comprend un boîtier électronique (non illustré) placé dans chaque pneumatique équipé d'un émetteur à radiofréquences à des fins de transmission sans fil desdites données à un module central 100 d'émission et de réception placé sur l'essieu ou sur le châssis du véhicule. Le module central 100 d'émission et de réception reçoit et décode les signaux informatifs émis par les émetteurs de chaque roue. Chaque boîtier électronique (non illustré) est équipé pour mesurer l'accélération.

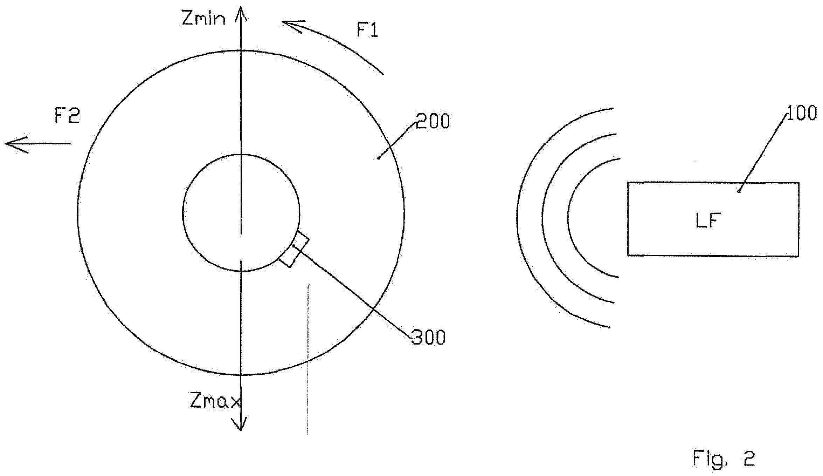

La figure 2 illustre une roue 200 disposée à l'avant du module central 100. Comme expliqué plus haut, la mesure de l'accélération par le boîtier électronique 300 durant la rotation (flèche F1) de la roue 200, c'est-à-dire pendant le déplacement du véhicule, permet de déterminer deux points :
- le point haut de la roue correspondant à une accélération en Z minimale désignée Z Min,
- le point bas de la roue correspondant à une accélération en Z maximale désignée Z Max.
Cette détermination des points haut et bas permet de diviser la roue 200, en une partie avant et une partie arrière. Comme illustré, le module central 100 émet en LF.

Chaque boîtier électronique 300 comprend :
une unité de réception (non illustrée) recevant des signaux radio du module central d'émission et de réception,
l'unité de réception étant capable de mesurer la puissance des signaux radio reçus du module central 100 d'émission et de réception.

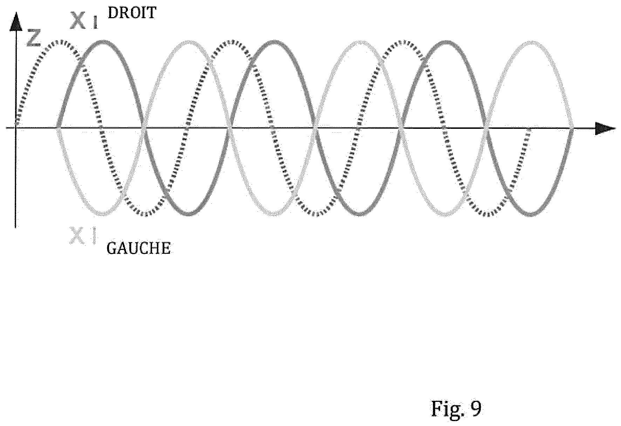

Conformément à l'invention, chaque boîtier électronique 300 met en oeuvre les opérations suivantes :
- il mesure la puissance des signaux radio LF émis par le module central 100 d'émission et de réception,
- il répartit les signaux radio reçus dans les deux ensembles de signaux suivants :
   premier ensemble correspondant aux signaux reçus chronologiquement entre le point haut (Z min) et le point bas (Z max),
   deuxième ensemble correspondant aux signaux reçus chronologiquement entre le point bas (Z max) et le point haut (Z min). Ces points haut et bas se retrouvent facilement à la lecture de la courbe de la figure 9 où les points haut et bas des courbes correspondent respectivement aux accélérations maximale et minimale mesurées. On comprend également que l'exploitation de capteurs « tilt » correspondrait à la détection directe d'un seul point haut ou bas des accélérations sans prises de mesure intermédiaire.

En comparant lesdits ensembles, en connaissant le sens d'avancement F2 du véhicule,
si une majorité de signaux reçus est mesurée à forte puissance entre le point haut et le point bas, la roue contenant le boîtier réalisant cette mesure est disposée à l'arrière du module central comme les roues 200' de la figure 1,
si, comme pour l'exemple illustré sur la figure 2, une majorité de signaux reçus est mesurée à faible puissance entre le point haut et le point bas, la roue 200 contenant le boîtier 300 réalisant cette mesure est disposée à l'avant du module central 100.

On comprend également que, si aucune majorité de signaux n'est établie, les roues concernées sont celles désignées 200" (cf. figure 1) situées à hauteur du module central 100. Conformément à l'invention, le module central 100 est positionné à hauteur d'un axe de roue à cette fin.

La partie de roue entre le point haut et le point bas où sont mesurées les puissances de signaux, sert ici de référence. Bien entendu, il est possible de choisir l'autre partie. Il est possible également d'utiliser la forte puissance comme référence et de déterminer quelle partie de roue reçoit le plus de signaux à forte puissance.

La détermination automatique de la position avant ou arrière des roues par rapport au module central 100 participe à l'auto localisation des roues en y associant une localisation droite/gauche telles celles connues de l'art antérieur.

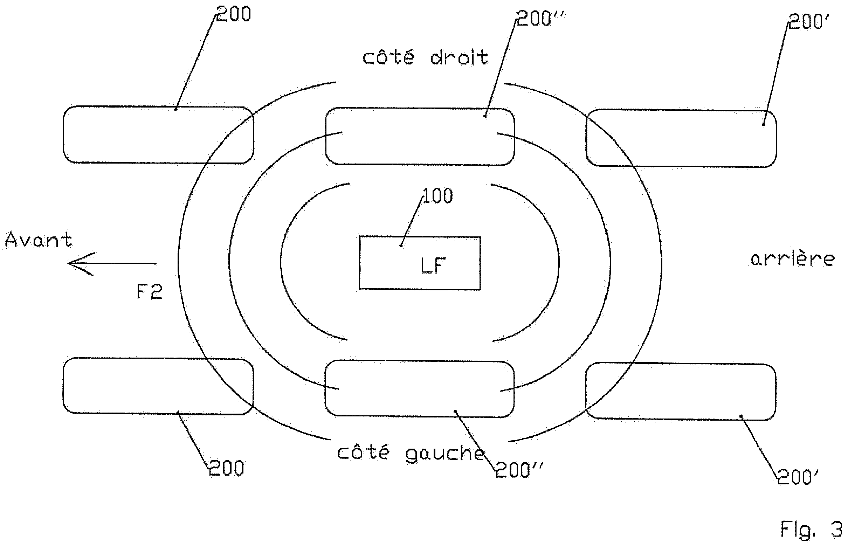

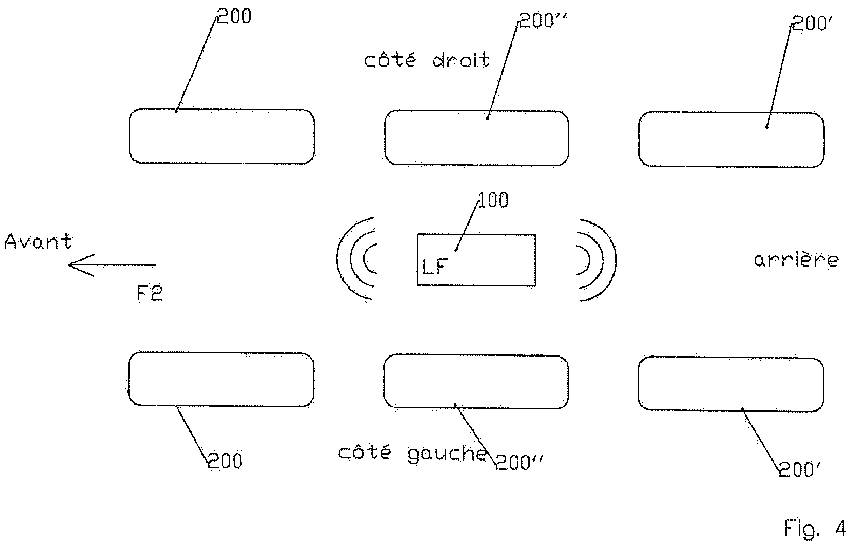

Une autre opération permettant d'affiner la localisation avant et arrière et/ou celle droite/gauche consiste à faire varier la puissance du signal LF émis par le module central 100, comme illustré sur les dessins des figures 3 et 4.

La puissance d'émission peut également être modulée en fonction de la taille du véhicule et de l'écartement des roues.

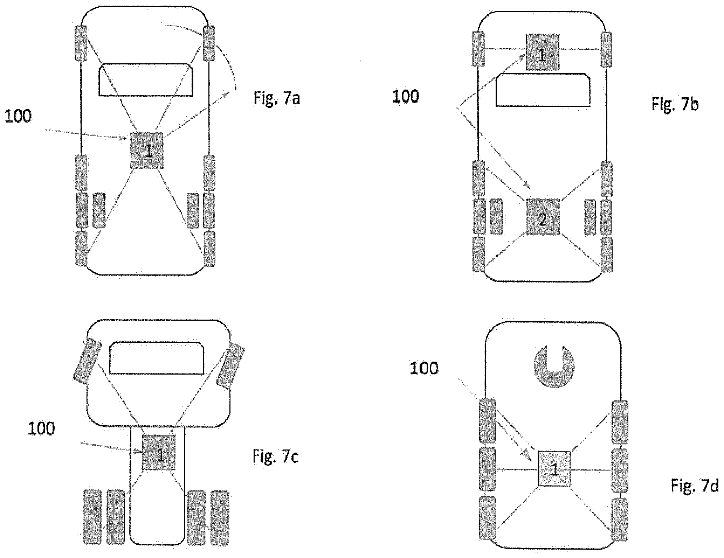

Selon un mode de réalisation préféré, le module de réception est positionné centré sur le châssis comme illustré sur les dessins des figures 7a, 7b, 7c, 7d. Selon que les roues se trouvent dans un rayon supérieur ou inférieur à deux mètres par rapport au module de réception 100 les configurations peuvent varier.

Les dessins des figures 7a, 7c et 7d illustrent des implantations de roues disposées à moins de 2 mètres du module de réception 100. Le dessin de la figure 7b illustre une implantation de roues dépassant le rayon de deux mètres et requérant ainsi la présence d'un deuxième module de réception 100.

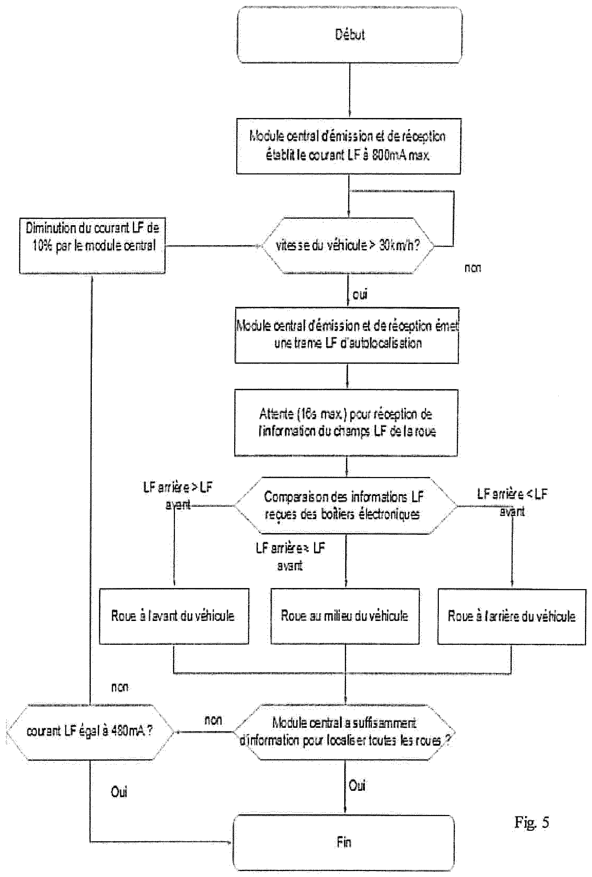

Selon un mode de réalisation préféré mais non limitatif, le procédé d'autolocalisation des roues d'un véhicule tel un camion suit les opérations suivantes :
- installation des boîtiers électroniques sur les roues du camion,
- configuration (en utilisant un module électronique portable ou avec une connexion CAN) et installation du module central sur le camion selon une position appropriée en regard du positionnement des roues du véhicule,
- lorsque le boitier électronique mesure une accélération radiale supérieure à 4 g, la localisation latérale est mise en oeuvre (selon une solution technique connue de l'art antérieur),
- le module central reçoit une information concernant la position latérale du capteur du boîtier électronique (information contenue dans le message transmis en RF),
- le module central interroge avec un signal LF pleine puissance afin de sélectionner les seuls capteurs montés sur le véhicule,
- le module central réalise la localisation avant/arrière par LF sur les capteurs des boîtiers électroniques selon le logigramme illustré par le dessin de la figure 5,
- le module central mémorise les localisations des capteurs des boîtiers électroniques.

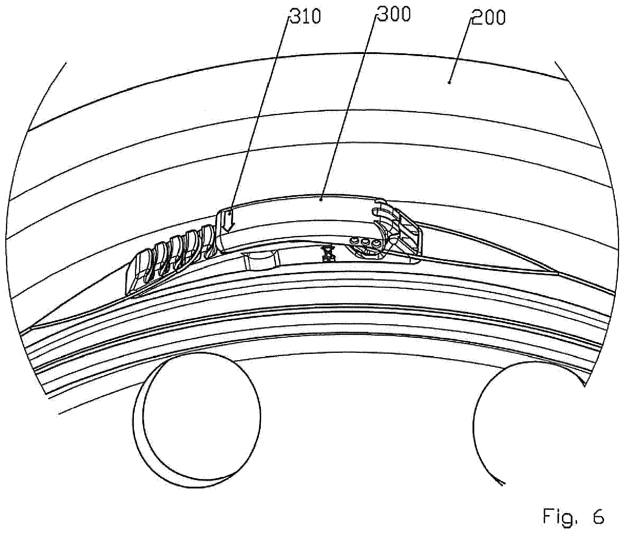

La figure 6 illustre un mode de réalisation d'un boîtier électronique permettant de mettre en oeuvre le procédé de l'invention. Comme illustré, ledit boîtier 300 comporte sur sa face supérieure une flèche 310 qui doit être positionnée pour toujours indiquer le même côté de la roue à savoir le côté flasque.

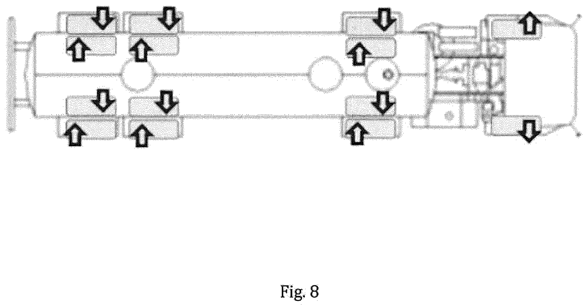

Ainsi, comme illustrés sur le dessin de la figure 8, les capteurs des deux roues positionnées à une même extrémité d'essieu sont alors disposés en opposition l'un de l'autre. En orientant systématiquement de la même façon les boîtiers électroniques des capteurs dans les roues, ils se retrouvent disposés en opposition lors des jumelages de roues. En connaissant le sens de rotation des roues, il est alors possible de différencier les signaux envoyés de deux roues jumelées.

## Revendications

1. Procédé d'autolocalisation d'un capteur d'acquisition de données équipant une roue incluant un pneumatique d'un véhicule,
ledit véhicule comprenant une pluralité de roues (200) et étant équipé d'un système comprenant un boîtier électronique (300) d'un capteur d'acquisition de données placé dans chaque pneumatique équipé d'un émetteur à radiofréquences à des fins de transmission sans fil desdites données à un module central d'émission et de réception (100) placé sur l'essieu ou sur le châssis du véhicule,
le module central d'émission et de réception (100) recevant et décodant les signaux informatifs émis par les émetteurs de chaque roue,
chaque boîtier électronique (300) étant équipé pour mesurer l'accélération et comprenant
une unité de réception recevant des signaux radio du module central d'émission et de réception,
l'unité de réception étant capable de mesurer la puissance des signaux radio reçus du module central d'émission et de réception (100),
**CARACTÉRISÉ EN CE QU'**il consiste à déterminer l'avant et l'arrière d'un pneumatique par prise de mesure de l'accélération pour déterminer à quel moment le capteur se trouve au point haut de sa trajectoire circulaire et à quel moment il se trouve à son point bas,
et comprend, pour chaque boîtier électronique (300), les opérations suivantes :
- mesure de la puissance des signaux radio émis par le module central d'émission et de réception (100) et reçus par le boîtier électronique,
- répartition des signaux radio reçus dans les deux ensembles de signaux suivants
premier ensemble correspondant aux signaux reçus chronologiquement entre le point haut et le point bas,
deuxième ensemble correspondant aux signaux reçus chronologiquement entre le point bas et le point haut,
de sorte que
si une majorité de signaux reçus est mesurée à forte puissance entre le point haut et le point bas, la roue (200) contenant le boîtier (300) réalisant cette mesure est disposée à l'arrière du module central (100),
si une majorité de signaux reçus est mesurée à faible puissance entre le point haut et le point bas, la roue (200) contenant le boîtier réalisant cette mesure est disposée à l'avant du module central d'émission et de réception (100).

2. Procédé selon la revendication 1, **CARACTÉRISÉ EN CE QU'**il comprend l'opération de fixation du module central d'émission et de réception (100) au niveau d'un axe d'essieu de sorte qu'une situation apparaisse où aucune majorité de signaux n'apparaît dans les signaux mesurés confirmant que la roue (200") contenant le boîtier (300) réalisant cette mesure est disposée à hauteur du module central (100).

3. Procédé selon la revendication 1, **CARACTÉRISÉ EN CE QUE** les signaux radios utilisés sont dans le spectre des basses fréquences (LF) c'est-à-dire la partie du spectre radioélectrique de fréquence comprise entre 30 kHz et 300 kHz.

4. Procédé selon la revendication 3, **CARACTÉRISÉ EN CE QU'**il comprend l'opération de variation de la puissance des signaux de basses fréquences (LF).

5. Procédé selon la revendication 1, **CARACTÉRISÉ EN CE QU'**il consiste à faire émettre l'émetteur du boîtier électronique (300) lorsque ce dernier se trouve bien orienté par rapport au module central d'émission et de réception (100).

6. Procédé selon la revendication 1, **CARACTÉRISÉ EN CE QU'**il consiste à faire émettre le module central d'émission et de réception (100) vers l'unité de réception du boîtier électronique (300) lorsque ce dernier se trouve bien orienté par rapport au module central d'émission et de réception (100).

7. Procédé selon la revendication 1, **CARACTÉRISÉ PAR LE FAIT QU'**il consiste à éviter de faire émettre simultanément les unités d'émission de boîtiers électroniques (300) fixés à des roues jumelées lorsqu'ils se trouvent dans la même zone.

8. Procédé selon la revendication 1, **CARACTÉRISÉ PAR LE FAIT QU'**il comprend un capteur de tilt haut ou bas de façon à déterminer dans quel secteur angulaire se trouve le boîtier.

9. Procédé selon la revendication 1, **CARACTÉRISÉ PAR LE FAIT QUE** chaque boîtier électronique (300) comprend un repère visuel (310) sur sa surface supérieure afin de respecter une orientation lors de son installation dans la roue.

## Patentansprüche

1. Verfahren zur Selbstlokalisierung eines Datenerfassungssensors, mit dem ein Rad einschließlich eines Reifens eines Fahrzeugs ausgestattet ist,
wobei das Fahrzeug eine Mehrzahl von Rädern (200) umfasst und mit einem System ausgestattet ist, das ein elektronisches Gehäuse (300) eines in jedem Reifen angeordneten Datenerfassungssensors umfasst, der mit einem Funksender zur drahtlosen Übertragung der Daten an ein zentrales Sende- und Empfangsmodul (100) ausgerüstet ist, das auf der Achse oder auf dem Fahrgestell des Fahrzeugs angebracht ist,
wobei das zentrale Sende- und Empfangsmodul (100) die von den Sendern jedes Rades gesendeten Informationssignale empfängt und entschlüsselt,
wobei jedes elektronische Gehäuse (300) zum Messen der Beschleunigung ausgestattet ist und
eine Empfangseinheit umfasst, die Funksignale von dem zentralen Sende- und Empfangsmodul empfängt,
wobei die Empfangseinheit in der Lage ist, die Leistung der vom zentralen Sende- und Empfangsmodul (100) empfangenen Funksignale zu messen,
**DADURCH GEKENNZEICHNET, DASS** es darin besteht, vorne und hinten eines Reifens durch Messung der Beschleunigung zu bestimmen, um festzustellen, wann sich der Sensor auf dem oberen Punkt seiner Kreisbahn befindet und wann er sich auf seinem unteren Punkt befindet,
und für jedes elektronische Gehäuse (300) die folgenden Schritte umfasst:
- Messung der Leistung der Funksignale, die vom zentralen Sende- und Empfangsmodul (100) gesendet und vom elektronischen Gehäuse empfangen werden,
- Aufteilung der empfangenen Funksignale in folgende zwei Signalgruppen,
wobei die erste Gruppe den Signalen entspricht, die chronologisch zwischen dem oberen Punkt und dem unteren Punkt empfangen wurden,
wobei die zweite Gruppe den Signalen entspricht, die chronologisch zwischen dem unteren Punkt und dem oberen Punkt empfangen wurden,
so dass,
wenn eine Mehrheit der empfangenen Signale bei hoher Leistung zwischen dem oberen und dem unteren Punkt gemessen wird, das Rad (200), das das Gehäuse (300) enthält, das diese Messung durchführt, hinter dem zentralen Modul (100) angeordnet ist,
wenn eine Mehrheit der empfangenen Signale bei niedriger Leistung zwischen dem oberen und dem unteren Punkt gemessen wird, das Rad (200), das das Gehäuse enthält, das diese Messung durchführt, vor dem zentralen Sende- und Empfangsmodul (100) angeordnet ist.

2. Verfahren nach Anspruch 1, **DADURCH GEKENNZEICHNET, DASS** es den Schritt des Befestigens des zentralen Sende- und Empfangsmoduls (100) an einer Achswelle umfasst, so dass eine Situation auftritt, in der keine Signalmehrheit in den gemessenen Signalen auftritt, die bestätigt, dass das Rad (200"), das das Gehäuse (300) enthält, das diese Messung durchführt, auf Höhe des zentralen Moduls (100) angeordnet ist.

3. Verfahren nach Anspruch 1, **DADURCH GEKENNZEICHNET, DASS** die verwendeten Funksignale im Niederfrequenzbereich (LF) liegen, also in dem Teil des Funkfrequenzbereichs mit einer Frequenz zwischen 30 kHz und 300 kHz.

4. Verfahren nach Anspruch 3, **DADURCH GEKENNZEICHNET, DASS** es den Schritt der Veränderung der Leistung von niederfrequenten (LF) Signalen umfasst.

5. Verfahren nach Anspruch 1, **DADURCH GEKENNZEICHNET, DASS** es darin besteht, den Sender des elektronischen Gehäuses (300) zum Senden zu veranlassen, wenn letzteres in Bezug auf das zentrale Sende- und Empfangsmodul (100) richtig ausgerichtet ist.

6. Verfahren nach Anspruch 1, **DADURCH GEKENNZEICHNET, DASS** es darin besteht, das zentrale Sende- und Empfangsmodul (100) zum Senden an die Empfangseinheit des elektronischen Gehäuses (300) zu veranlassen, wenn letzteres in Bezug auf das zentrale Sende- und Empfangsmodul (100) richtig ausgerichtet ist.

7. Verfahren nach Anspruch 1, **DADURCH GEKENNZEICHNET, DASS** es darin besteht, zu vermeiden, dass die Sendeeinheiten von elektronischen Gehäusen (300), die an Zwillingsrädern befestigt sind, gleichzeitig senden, wenn sie sich im selben Bereich befinden.

8. Verfahren nach Anspruch 1, **DADURCH GEKENNZEICHNET, DASS** es einen oberen und unteren Tilt-Sensor umfasst, um zu bestimmen, in welchem Winkelsektor sich das Gehäuse befindet.

9. Verfahren nach Anspruch 1, **DADURCH GEKENNZEICHNET, DASS** jedes elektronische Gehäuse (300) eine Sichtmarke (310) auf seiner Oberseite umfasst, um beim Einbau in das Rad eine Ausrichtung einzuhalten.

## Claims

1. Self-tracking method for a data acquisition sensor equipping a wheel including a vehicle tire,
said vehicle comprising a plurality of wheels (200) and being equipped with a system comprising an electronic unit (300) for a data acquisition sensor, placed in each tire and equipped with a radio frequency transmitter for the purpose of wireless transmission of said data to a central transmission and reception module (100) placed on the axle or on the frame of the vehicle,
the central transmission and reception module (100) receiving and decoding the information signals transmitted by the transmitters on each wheel,
each electronic unit (300) being equipped to measure acceleration and comprising
a receiving unit receiving radio signals from the central transmission and reception module,
the reception unit being capable of measuring the power of the radio signals received from the central transmission and reception module (100),
**CHARACTERIZED IN THAT** it consists of determining the front and rear of a tire by measuring the acceleration to determine at which moment the sensor is located at the high point of its circular trajectory and at which moment it is located at its low point,
and comprises, for each electronic unit (300), the following operations:
- measurement of the power of the radio signals issued by the central transmission and reception module (100) and received by the electronic unit,
- distribution of the received radio signals into the two following signal groups
first group corresponding to the signals received chronologically between the high point and the low point,
second group corresponding to the signals received chronologically between the low point and the high point,
such that
if a majority of received signals is measured at high power between the high point and the low point, the wheel (200) containing the unit (300) completing this measurement is arranged at the rear of the central module (100),
if a majority of signals received is measured at low power between the high point and the low point, the wheel (200) containing the unit completing this measurement is arranged at the front of the central transmission and reception module (100).

2. Method according to claim 1, **CHARACTERIZED IN THAT** it comprises the operation of fixing the central transmission and reception module (100) at the level of an axis of the axle such that a situation occurs where no majority appears in the signals measured confirming that the wheel (200") containing the unit (300) completing this measurement is placed at the height of the central module (100) .

3. Method according to claim 1, **CHARACTERIZED IN THAT** it comprises the radio signals used are in the low frequency spectrum (LF), that is, the portion of the radio electric frequency spectrum comprised between 30 kHz and 300 kHz.

4. Method according to claim 3, **CHARACTERIZED IN THAT** it comprises the operation of variation of the power of the low frequency signals (LF).

5. Method according to claim 1, **CHARACTERIZED IN THAT** it comprises causing the transmitter to transmit from the electronic unit (300) when the latter is located properly oriented in relation to the central transmission and reception module (100).

6. Method according to claim 1, **CHARACTERIZED IN THAT** it comprises causing the central transmission and reception module (100) to transmit to the electronic unit (300) reception device when the latter is well oriented in relation to the central transmission and reception module (100) .

7. Method according to claim 1, **CHARACTERIZED IN THAT** it comprises avoiding causing the transmission units of the electronic units to simultaneously transmit to the electronic units (300) fixed to twinned wheels when they are located in the same zone.

8. Method according to claim 1 **CHARACTERIZED IN THAT** it comprises a high or low tilt sensor so as to determine in which angular section the unit is located.

9. Method according to claim 1, **CHARACTERIZED IN THAT** each electronic unit (300) comprises a visual benchmark (310) on its upper surface in order to comply with an orientation during its installation on the wheel.
